# EUROPEAN PATENT APPLICATION

(11) **EP 4 354 276 A1**
(43) Date of publication of application: **17.04.2024**
(21) Application number: 22209551.5
(22) Date of filing: 25.11.2022
(51) Int. Cl.: G06F 3/147, B60R 16/023

(54) **COCKPIT DOMAIN CONTROL DEVICE AND METHOD FOR DETECTING DISPLAY ERROR BY USING COCKPIT DOMAIN CONTROL DEVICE**

(30) Priority: 14.10.2022 CN 202211260058
(71) Applicant: Nio Technology (Anhui) Co., Ltd, Hefei City, Anhui 230601 (CN)
(72) Inventor: SAEZ, Emmanuel, Hefei, Anhui, 230601 (CN); ANAND, Ashish, Hefei, Anhui, 230601 (CN); WANG, Jiahao, Hefei, Anhui, 230601 (CN)
(74) Representative: Vossius & Partner Patentanwälte Rechtsanwälte mbB

(57) **Abstract**

The disclosure relates to a cockpit domain control device and a method for detecting a display error by using the cockpit domain control device. The cockpit domain control device includes an execution module and a verification module. The execution module is configured to receive a display request and provide a display configuration based on the display request. The verification module is in communication with the execution module, and the verification module is configured to: receive the display request, receive the display configuration from the execution module, and verify whether the display configuration is consistent with the display request, and if the display configuration is inconsistent with the display request, indicate that there is an error in the execution module. In the disclosure, a cockpit domain control device with an architecture that includs both an execution module and a verification module is used to monitor an error of a display system in a vehicle cockpit, thereby improving the driving safety of the vehicle.

## Description

### Technical Field

The disclosure relates to the field of a vehicle, and in particular to a cockpit domain control device and a method for detecting a display error by using the device.

### Background Art

Automotive intelligence includes two major development directions, driving automation and cockpit intelligence. Intelligent driving and intelligent cockpits are respectively the key implementation functions in the two directions. The intelligent driving technology is widely popularized in the current automotive industry, and compared to traditional manual driving, the intelligent driving can free people from a dynamic driving task. With the development of Internet and communication technologies, the intelligent cockpit is becoming more and more intelligent, popular, and comfortable. Compared to a traditional automobile cockpit that only indicates various driving conditions, by updating the interior of a vehicle cockpit, the intelligent cockpit can become a digital, informationized, and multifunctional platform. In the context of networking technologies, the intelligent driving and intelligent cockpit can be integrated to jointly motivate the automobile transition to a "third living space".

An intelligent cockpit domain controller is commonly used to control functions of an electronic system of the vehicle cockpit. The functions of the electronic system usually can integrate traditional functions of an in-vehicle information system and an in-vehicle entertainment system, and at the same time, can integrate functions of a driver monitoring system, an event data recorder, and an air conditioner controller. Meanwhile, the intelligent driving also adds more safety-related functions to the intelligent cockpit domain controller. For example, a vehicle with an intelligent driving mode often controls the display of safety-related icons by using the intelligent cockpit domain controller. However, if safety-related information is displayed incorrectly or is not displayed at a correct time, the safe driving of the vehicle may be affected.

### Summary of the Disclosure

The disclosure provides a cockpit domain control device and a method for detecting a display error by using the device. The cockpit domain control device provided in the disclosure improves its own system architecture and has two working modules. In addition, in the disclosure, the two modules cooperate to actively detect a display error in a cockpit, so that a driver and a passenger can be reminded timely and effectively when there is an error in a display system.

A first aspect of the disclosure provides a cockpit domain control device, where the cockpit domain control device includes an execution module and a verification module. The execution module is configured to receive a display request and provide a display configuration based on the display request. The verification module is in communication with the execution module, and the verification module is configured to: receive the display request, receive the display configuration from the execution module, and verify whether the display configuration is consistent with the display request, and if the display configuration is inconsistent with the display request, indicate that there is an error in the execution module.

According to the cockpit domain control device in the first aspect of the disclosure, optionally, the execution module and the verification module are respectively implemented by different integrated circuit chips.

According to the cockpit domain control device in the first aspect of the disclosure, optionally, the verification module is further configured to: based on a type of the error, determine a warning to be provided, and/or determine a manner of providing the warning.

According to the cockpit domain control device in the first aspect of the disclosure, optionally, the manner of providing the warning includes: adjusting a display setting of the display configuration, and/or providing an audio alarm.

According to the cockpit domain control device in the first aspect of the disclosure, optionally, the case where the display request is inconsistent with the display configuration includes: content shown by the display configuration is inconsistent with one or more requirements within the display request, or timing for displaying the display configuration is inconsistent with the one or more requirements within the display request.

A second aspect of the disclosure provides a display system for a cockpit, where the display system includes a display device and a cockpit domain control device. The display device is located within the cockpit. The cockpit domain control device is in communication with the display device, and the cockpit domain control device includes an execution module and a verification module. The execution module is configured to receive a display request and provide a display configuration for the display device based on the display request. The verification module is in communication with the execution module, and the verification module is configured to: receive the display request, receive the display configuration from the execution module, and verify whether the display configuration is consistent with the display request, and if the display configuration is inconsistent with the display request, indicate that there is an error in the execution module.

According to the display system in the second aspect of the disclosure, optionally, the execution module and the verification module are respectively implemented by different integrated circuit chips.

According to the display system in the second aspect of the disclosure, optionally, the verification module is further configured to: if the execution module has an error, determine a warning to be provided, and/or determine a manner of providing the warning.

According to the display system in the second aspect of the disclosure, optionally, the manner of providing the warning includes: adjusting a display setting of the display configuration.

According to the display system in the second aspect of the disclosure, optionally, the display system further includes an audio device, and the manner of providing the warning includes: providing an audio alarm through the audio device.

According to the display system in the second aspect of the disclosure, optionally, the case where the display request is inconsistent with the display configuration includes: content shown by the display configuration is inconsistent with one or more requirements within the display request, or timing for displaying the display configuration is inconsistent with the one or more requirements within the display request.

A third aspect of the disclosure provides a method for detecting a display error by using a cockpit domain control device, where the cockpit domain control device includes an execution module and a verification module, and the method includes: receiving, by the execution module, a display request; providing, by the execution module, a display configuration based on the display request; receiving, by the verification module, the display request and the display configuration; and verifying, by the verification module, whether the display configuration is consistent with the display request; and if the display configuration is inconsistent with the display request, indicating, by the verification module, that there is an error in the execution module.

According to the method in the third aspect of the disclosure, optionally, the execution module and the verification module are respectively implemented by different integrated circuit chips.

According to the method in the third aspect of the disclosure, optionally, the method further includes: if the display configuration is inconsistent with the display request, based on a type of the error, determining a warning to be provided, and/or determining a manner of providing the warning.

According to the method in the third aspect of the disclosure, optionally, the manner of providing the warning includes: adjusting a display setting of the display configuration, and/or providing an audio alarm.

According to the method in the third aspect of the disclosure, optionally, the case where the display request is inconsistent with the display configuration includes: content shown by the display configuration is inconsistent with the requirements within the display request, or timing for displaying the display configuration is inconsistent with the requirements within the display request.

A fourth aspect of the disclosure provides a cockpit, where the cockpit includes the display system according to the second aspect of the disclosure.

A fifth aspect of the disclosure provides a vehicle, where the vehicle includes a cockpit, and the cockpit includes the display system according to the second aspect of the disclosure.

A sixth aspect of the disclosure provides a computer storage medium, where the computer storage medium includes instructions executable by one or more processors which, upon such execution, the method according to the third aspect of the disclosure is performed.

The cockpit domain control device according to the disclosure uses a dual-module system architecture to control display functions of the display system within an intelligent cockpit, where one module (for example, the execution module) is responsible for content generation and display, and the other module (for example, the verification module) is responsible for monitoring whether the displayed content is correct. The cockpit domain control device according to the disclosure can effectively monitor whether the content displayed on the display system within the intelligent cockpit is correct, and in addition, when there is an error in the displayed content, a warning is immediately sent to the driver and the passenger, thereby ensuring a driving safety of the vehicle.

### Brief Description of the Drawings

FIG. 1 is a system block diagram of a vehicle according to an embodiment of the disclosure.
FIG. 2 is a block diagram of a cockpit domain control device according to an embodiment of the disclosure.
FIG. 3 is a block diagram of illustrating control logic of a cockpit domain control device according to an embodiment of the disclosure.
FIG. 4 is a flowchart of a method for detecting a display error according to an embodiment of the disclosure.

### Detailed Description of Embodiments

The following further describes a cockpit domain control device, a method for detecting a display error by using the device, a display system including the device, a cockpit, and a vehicle in the disclosure in detail with reference to the accompanying drawings. It should be noted that the following detailed description of embodiments is exemplary rather than limiting, and is intended to provide a basic understanding of the disclosure, and is not intended to confirm key or decisive elements of the disclosure or limit the scope of protection.

The disclosure is described below with reference to the block diagram descriptions, the block diagrams, and/or the flowcharts of the methods and apparatuses in the embodiments of the disclosure. It will be understood that each block of these flowchart descriptions and/or the block diagrams, and combinations of the flowchart descriptions and/or the block diagrams, can be implemented by computer program instructions. These computer program instructions may be provided for a processor of a general-purpose computer, a dedicated computer, or another programmable data processing device to generate a machine, so that the instructions executed by the processor of the computer or another programmable data processing device create components for implementing the functions/operations specified in these flowcharts and/or blocks and/or one or more flow block diagrams.

These computer program instructions may be stored in a computer-readable memory, and the instructions can instruct a computer or another programmable processor to implement the functions in a specific manner, so that the instructions stored in the computer-readable memory generate a manufactured product containing instruction components that implement the functions/operations specified in one or more blocks of the flowcharts and/or the block diagrams.

These computer program instructions may be loaded onto the computer or another programmable data processor, so that a series of operations and steps are performed on the computer or another programmable processor, to generate a computer-implemented process. As such, the instructions executed on the computer or another programmable data processor provide steps for implementing the functions or operations specified in one or more blocks in the flowcharts and/or block diagrams. It should also be noted that in some alternative implementations, the functions/operations shown in the blocks may not occur in the order shown in the flowcharts. For example, two blocks shown in sequence may actually be executed substantially simultaneously or the blocks may sometimes be executed in a reverse order, depending on the functions/operations involved.

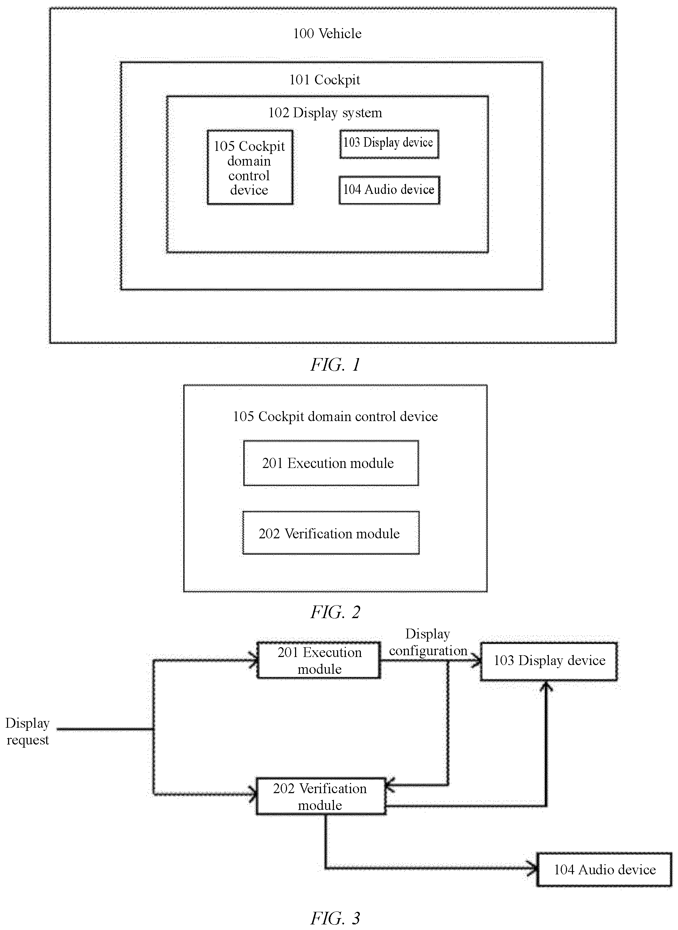

A vehicle 100 according to one implementation of the disclosure will be described below in conjunction with FIG. 1.

FIG. 1 is a block diagram of the vehicle 100 according to one or more embodiments of the disclosure. As shown in FIG. 1, the vehicle 100 includes a cockpit 101. In various embodiments, the cockpit 101 is an intelligent cockpit, with which a driver and a passenger of the vehicle 100 can interact with image display and audio input/output of the vehicle 100. The cockpit 101 includes a display system 102. The display system 102 includes a cockpit domain control device 105, a display device 103, and an audio device 104. The display device 103 and the audio device 104 are output devices of the display system 102, to provide information content for the driver and the passenger in the vehicle. The display device 103 can provide an image output for the driver and the passenger in the cockpit 101, and the audio device 104 can provide audio output for the driver and the passenger in the cockpit 101. The cockpit domain control device 105 is a processing control device in the display system 102, and the cockpit domain control device 105 is in communication with the display device 103 and the audio device 104 separately. When another electronic control unit (ECU) in the vehicle 100 sends a display request to the display system 102, the cockpit domain control device 105 can receive and process the display request, and send, based on a processing result, a display configuration associated with the display request to the display device 103 and/or the audio device 104 for output. That is, the cockpit domain control device 105 can control outputs of the display device 103 and the audio device 104 based on the display request received by the display system 102.

In some embodiments, when an ECU of the vehicle 100 detects that an internal component of the vehicle 100 is faulty and affects the safe driving, the driver and the passenger are usually prompted by the display system 102 to go to a repair station to repair the vehicle 100 as soon as possible. In some other embodiments, when the vehicle 100 is in a driver assistance mode, ECUs that are related to the driver assistance mode may use the display system 102 to provide the driver and the passenger with driver assistance messages such as road condition information from a sensor of the vehicle. These safety-related notification messages are of great significance to the safe driving of the vehicle 100. Therefore, it is very important for the cockpit domain control device 105 to accurately process the display requests made by the related ECUs and correctly output the associated messages. If safety-related information is displayed incorrectly or is not displayed at a correct time, the safe driving of the vehicle 100 may be affected. To ensure correct display of the display system 102, a design of preventing electromagnetic compatibility (EMC) and electromagnetic interference (EMI) may be made on the cockpit domain control device 105 in the display system 102. In addition, the present disclosure provides a system architecture and a processing logic of the cockpit domain control device 105 for improving display reliability of the display system 102.

A cockpit domain control device 105 according to one implementation of the disclosure will be described below in conjunction with FIG. 2.

FIG. 2 is a block diagram of the cockpit domain control device 105 as shown in FIG. 1. As shown in FIG. 2, the cockpit domain control device 105 includes an execution module 201 and a verification module 202, where the execution module 201 is in communication with the verification module 202. The execution module 201 is configured to receive a display request from another ECU of a vehicle 100 and provide a display configuration for a display device 103 based on the received display request. In this embodiment of the disclosure, the execution module 201 can analyze its received display request, and provide the display configuration for the display device 103 by computing and managing each pixel displayed in the display device 103. The verification module 202 is configured not only to receive the display request from the another ECU of the vehicle 100, but also to monitor in real time the display configuration provided by the execution module 201 based on the display request. When the verification module 202 monitors that the execution module 201 sends the display configuration to the display device 103, the verification module 202 receives the display configuration from the execution module 201 at the same time. The verification module 202 is further configured to compare the received display request against the received display configuration, to verify whether the display configuration is consistent with the display request; and if the display configuration is consistent with the display request, indicate that the execution module 201 correctly executes the display request, or if the display configuration is inconsistent with the display request, indicate that there is an error in the execution module 201.

It can be seen that the verification module 202 can play a supplementary role in verifying an execution result of the execution module 201, thereby ensuring that the execution module 201 accurately processes its received display request. In this embodiment of the disclosure, the verification module 202 has an internal self-diagnosis function, including but not limited to kernel monitoring, clock monitoring, storage medium monitoring, internal communication monitoring, or any combination thereof. The verification module 202 can solve its own errors by using the self-diagnosis function. Moreover, because the verification module 202 does not generate displayed content, the verification module 202 has a high diagnosis coverage for its own failure and thereby ensures the accuracy of its own logic. In this embodiment of the disclosure, the execution module 201 and the verification module 202 are implemented by separate integrated circuit (IC) chips. That is, the cockpit domain control device 105 uses a dual-IC chip system architecture. In other embodiments, the self-verification function for detecting display errors of the cockpit domain control device 105 may be implemented in other manners.

Control logic of a cockpit domain control device 105 according to one implementation of the disclosure will be described below in conjunction with FIG. 3.

FIG. 3 is a block diagram of the control logic of the cockpit domain control device 105 as shown in FIG. 1. As shown in FIG. 3, when an ECU sends a display request to a display system 102, an execution module 201 and a verification module 202 of the display system 102 simultaneously receive the display request. The execution module 201 conducts processing based on the one or more requirements of the display request and provides a display configuration for a display device 103, so that the output of the display device 103 is based on the display configuration. Meanwhile, the verification module 202 monitors the execution module 201 in real time. When the verification module 202 monitors that the execution module 201 provides the display configuration for the display device 103, the verification module 202 further receives the provided display configuration, and compares the received display request against the display configuration to verifies whether the display configuration outputted from the display device 103 is consistent with the display request. If the display configuration is consistent with the display request, it is indicated that the execution module 201 correctly executes a display function; if the display configuration is inconsistent with the display request, it is indicated that there is an error in the execution module 201.

Cases where the display request is inconsistent with the display configuration include but are not limited to: content shown by the display configuration is inconsistent with one or more requirements within the display request, or timing for displaying the display configuration is inconsistent with the requirements within the display request. This is because the safe driving of a vehicle 100 will be affected if an incorrect safety-related message notification is provided to a driver and a passenger or the message notification is not displayed at a specified time.

The execution module 201 may fail in various ways and result in different errors. The verification module 202 can determine which manner is to be used to provide warnings to the driver and the passenger based on a type of the error of the display configuration. The driver and the passenger can be directly or indirectly prompted. In some embodiments, the verification module 202 can determine a warning to be provided to the driver and the passenger by classifying the errors: if the verification module 202 determines that the error of the display configuration does not affect the continued driving of the vehicle 100, the verification module 202 may only record the error, but not prompt the driver (i.e. not sending a display prompt or sound prompt to the display device 103 and/or an audio device 104); or if the verification module 202 determines that the error of the display configuration affects the continued driving of the vehicle 100, the verification module 202 needs to send a display prompt or sound prompt to the display device 103 and/or an audio device 104, to prompt the driver and the passenger that there is an error in the display. In other words, the two manners of providing warnings to the driver and the passenger, including sending a sound prompt to the audio device 104 and sending a display prompt to the display device 103, may be simultaneously used or separately selected to use. The sending of a sound prompt to the audio device 104 includes: sending an indication message for enabling a warning to the audio device 104. The sending of a display prompt to the display device 103 includes: sending an indication message for adjusting a display setting of the display configuration to the display device 103. In some embodiments, adjusting a display setting of the display configuration may include changing screen brightness of the display device 103 (including increasing the screen brightness, decreasing the screen brightness, or periodically changing the screen brightness). In other embodiments, the display setting of the display configuration may be adjusted in other manners as long as the adjustments can prompt the driver and the passenger.

In some other embodiments, the verification module 202 may further determine the manner of providing the warning to the driver and the passenger by estimating a degree to which the error of the display configuration affects the safety of the continued driving of the vehicle 100: if the verification module 202 determines that a category of the error of the display configuration is critical (that is, the error affects the continued driving of the vehicle 100, but the driving can still be maintained for a period of time), a message for indicating the display error is sent to the display device 103, to warn the driver and the passenger that there is a problem with screen display by changing the screen brightness of the display device 103; if the verification module 202 determines that a category of the error of the display configuration is urgent (that is, the error severely affects the current driving of the vehicle 100, and the driving cannot be maintained for a period of time), a message for indicating the display error may be simultaneously sent to the display device 103 and the audio device 104, to instruct the display device 103 to change the screen brightness in a high frequency and instruct the audio device 104 to start an audible alarm. When the driver and the passenger learn that the category of the error of the display configuration is critical, they can determine a specific request of theirs and decide whether to repair the vehicle at a repair station. Similarly, when the driver and the passenger learn that the category of the error of the display configuration is urgent, they can choose how to handle the situation under the circumstances. For example, they can pull over immediately and contact a user center for assistance.

In some other embodiments, the verification module 202 may directly provide a warning to the driver and the passenger as long as it detects that the display configuration is inconsistent with the display request, regardless of the type of the display error. The warning may be provided by changes in an output format of the display configuration of the display device 103, an audio alarm, or a combination thereof.

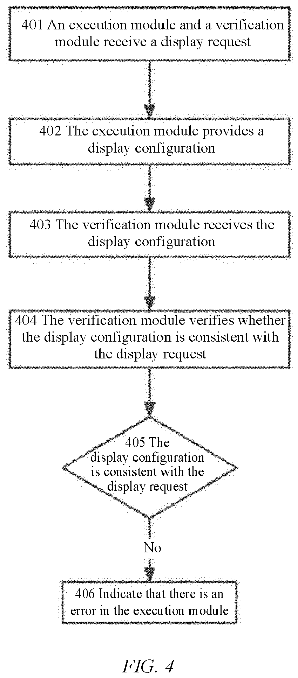

A method for detecting a display error according to one implementation of the disclosure will be described below in conjunction with FIG. 4.

FIG. 4 is a flowchart of the method for detecting a display error by using the cockpit domain control device 105 as shown in FIG. 1. As shown in FIG. 4, the method for detecting a display error by using the cockpit domain control device 105 includes the following steps: in step 401, when an ECU sends a display request to a display system 102, the display request is received by an execution module 201 and a verification module 202. Step 402 is performed after step 401, and in step 402, the execution module 201 provides a display configuration for a display device 103 by analyzing and processing the received display request, so that the display device 103 can perform display based on the received display configuration. Step 403 is performed after step 402, and in step 403, the verification module 202 continuously monitors the execution module 201, and also receives the display configuration when the execution module 201 sends the display configuration to the display device 103. Step 404 is performed after step 403, and in step 404, the verification module 202 performs further analysis and determination based on the previously received display request and the currently received display configuration, and if it is determined that the display configuration is being inconsistent with the display request, it is indicated that there is an error in the execution module 201. The verification module 202 may further determine the type of the error and the manner of indicating that there is an error in the execution module 201as described in the examples above, and details are not described herein again. If the verification module 202 determines that the display configuration is consistent with the display request, it is indicated that the execution module 201 accurately executes a display function, and the cockpit domain control device 105 does not perform any additional actions. In other embodiments, the cockpit domain control device 105 may additionally perform some actions as required.

Another aspect of the disclosure further provides a computer storage medium, where the computer storage medium includes instructions executable by one or more processors which, upon such execution, the method for detecting a display error in a display system 102 of a cockpit 101 as described in FIG. 4 may be performed. The computer storage medium mentioned herein includes various types of computer storage media, and may be any usable medium accessible to a general-purpose or special-purpose computer. For example, the computer storage medium may include a RAM, a ROM, an EPROM, an E²PROM, a register, a hard disk, a removable hard disk, a CD-ROM or another optical memory, a magnetic disk memory or other magnetic storage devices, or any other transitory or non-transitory media that can carry or store expected program code having an instruction or data structure form and be accessible to the general-purpose or special-purpose computer or a general-purpose or special-purpose processor.

The cockpit domain control device according to the disclosure can use a dual-module architecture to control the display function of the display system of the intelligent cockpit. In some embodiments of the disclosure, the function of controlling the cockpit domain display system may be implemented by the cockpit domain control device by using two integrated circuit chips, where a first integrated circuit chip (corresponding to the execution module 201) is configured to display content, and a second integrated circuit chip (corresponding to the verification module 202) is responsible for monitoring the display error. In a system architecture consisting of two integrated circuit chips, a display request may be simultaneously input to the two integrated circuit chips. After generating a display configuration based on the display request, the first integrated circuit chip outputs the display configuration to the display device 103, and also outputs the display configuration to the second integrated circuit chip. The second integrated circuit chip determines, based on the received display request and the received display configuration, whether the display request is executed correctly. When the second integrated circuit chip monitors that the display request is not executed correctly, the user may be prompted by changes in the screen brightness of the display device 103 (an increase or a decrease in the brightness, or periodical changes in the brightness), or the user may be prompted in an audio manner. The manner of changing the screen brightness of the display device 103 and the manner of providing an audio alarm may be used simultaneously, or may be used separately. The cockpit domain control device according to the disclosure monitors the display system itself, so that when there is a display error, the driver and the passenger can pay attention to the display error, thereby ensuring the driving safety of the vehicle.

Although only some features of the disclosure are illustrated and described herein, various modifications and variations may be made by those skilled in the art. Therefore, it should be understood that the appended claims intend to cover all of the above modifications and variations falling within the essence and spirit scope of the disclosure.

## Claims

1. A cockpit domain control device, wherein the cockpit domain control device comprises:
an execution module (201), wherein the execution module (201) is configured to receive a display request and provide a display configuration based on the display request; and
a verification module (202), wherein the verification module (202) is in communication with the execution module (201) and the verification module (202) is configured to:
receive the display request;
receive the display configuration from the execution module (201);
determining, by the verification module (202), the display configuration is being inconsistent with the display request; and
indicate that there is an error in the execution module (201).

2. The cockpit domain control device according to claim 1, wherein the execution module (201) and the verification module (202) are respectively implemented by different integrated circuit chips.

3. The cockpit domain control device according to claim 1 or 2, wherein the verification module (202) is further configured to determine a warning to be provided.

4. The cockpit domain control device according to any one of claims 1 to 3, wherein the verification module (202) is further configured to determine a manner of providing a warning.

5. The cockpit domain control device according to claim 4, wherein the manner of providing the warning comprises adjustments in a display setting of the display configuration, an audio alarm, or a combination thereof.

6. The cockpit domain control device according to any one of claims 1 to 5, wherein the determination that the display configuration is being inconsistent with the display request is based on an inconsistency between content shown by the display configuration and one or more requirements within the display request, or an inconsistency between timing for displaying the display configuration and the one or more requirements within the display request.

7. A vehicle comprising a display system, wherein the display system comprises:
a display device (103), wherein the display device (103) is located within a cockpit (101) of the vehicle (100); and
a cockpit domain control device (105) in communication with the display device (103), wherein the cockpit domain control device (105) comprises:
an execution module (201), wherein the execution module (201) is configured to receive a display request and provide a display configuration for the display device (103) based on the display request; and
a verification module (202), wherein the verification module (202) is in communication with the execution module (201) and the verification module (202) is configured to:
receive the display request;
receive the display configuration from the execution module (201);
determine the display configuration is being inconsistent with the display request; and
indicate that there is an error in the execution module (201).

8. The display system according to claim 7, wherein the execution module (201) and the verification module (202) are respectively implemented by different integrated circuit chips.

9. The cockpit domain control device according to claim 7 or 8, wherein the verification module (202) is further configured to determine a warning to be provided.

10. The cockpit domain control device according to any on of claims 7 to 9, wherein the verification module (202) is further configured to determine a manner of providing a warning;
Preferably, wherein the manner of providing the warning comprises adjustments in a display setting of the display configuration, an audio alarm, or a combination thereof.

11. The display system according to any one of claims 7 to 10, further comprising an audio device (104) configured to provide an audio alarm.

12. The display system according to any one of claims 7 to 11, wherein determination that the display configuration is being inconsistent with the display request is based on an inconsistency between content shown by the display configuration and one or more requirements within the display request, or an inconsistency between timing for displaying the display configuration and the one or more requirements within the display request.

13. A method for detecting a display error by using a cockpit domain control device, comprising:
receiving, by an execution module (201), a display request;
receiving, by a verification module (202), the display request;
providing, by the execution module (201), a display configuration based on the display request;
receiving, by the verification module (202), the display configuration;
determining, by the verification module (202), the display configuration is being inconsistent with the display request; and
indicating that there is an error in the execution module (201).

14. The method according to claim 13, wherein the execution module (201) and the verification module (202) are respectively implemented by different integrated circuit chips; and/or
the method further comprising:
determining, by the verification module (202), a type of the error; and
providing a warning in response to the type of the error, wherein the warning comprises adjustments in a display setting of the display configuration, an audio alarm, or a combination thereof.

15. The method according to any one of claims 13 or 14, wherein determining the display configuration is being inconsistent with the display request comprises:
determining, by the verification module (202), content shown by the display configuration is being inconsistent with one or more requirements within the display request, or timing for displaying the display configuration is inconsistent with the one or more requirements of the display request.
